# EUROPEAN PATENT SPECIFICATION

(11) **EP 1 499 544 B1**
(45) Date of publication and mention of the grant of the patent: **23.07.2008**
(21) Application number: 03728167.2
(22) Date of filing: 02.05.2003
(51) Int. Cl.: B65G 17/08

(54) **CONVEYOR BELT**
FÖRDERBAND
COURROIE DE TRANSPORTEUR

(30) Priority: 02.05.2002 NL 1020520
(43) Date of publication of application: 26.01.2005
(73) Proprietor: Kaak, Johan Hendrik Bernard, 7011 DZ Gaanderen (NL)
(72) Inventor: PASCH, Lothar, 7061 WV Terborg (NL)
(74) Representative: Ferguson, Alexander
(86) International application number: PCT/NL2003/000323
(87) International publication number: WO 2003/093147

(56) References cited:
- EP-A- 0 521 506
- EP-A- 0 631 950
- EP-A- 0 722 896
- DE-A- 2 344 975
- US-A- 3 785 476
- US-A- 4 901 844

## Description

The invention relates to a conveyor belt according to the preamble of claim 1.

Such a conveyor belt is known from US-A-3785476.

Such conveyor belts are predominantly used in the food industry, particularly in so-called spiral towers, for cooling or heating, rising (proving) etc., in which the conveyor belt traverses a spiral-shaped path, engaged at its inside for driving.

Said conveyor belts among other things have to be easy to clean, and to that end often have an open structure. They have been built up from elongated, transversely oriented synthetic support parts or links, having a kind of zig-zag shape, which in the direction of the conveyor belt extend into each other, and are connected there by means of connection rods.

The portions of the links situated at the outer longitudinal edges of the conveyor belt are loaded by tensile forces and are subjected to wear, as a result of which the links have to be regularly replaced. The material of the links has indeed been adapted to this as well as can be expected, but concessions have to be made in connection with the weight of the belt as a whole.

It is known to use links that have been built up from a number of modules placed adjacently and (square jointed or butt) against each other. Considerable wear may occur here at the location of the contact locations between the modules. Moreover the course of the belt may become disturbed as a result of this. In order to prevent running apart, such modules have to be firmly secured to the connection rods, which is difficult and requires particular care.

It is an object of the invention to improve on this.

It is another object of the invention to provide a conveyor belt of the aforementioned type which less often needs maintenance and repairs.

It is a further object of the invention to provide a conveyor belt of the aforementioned type which is easy to repair.

In order to achieve one of these objects, the invention provides a conveyor belt as defined in claim1.

Due to said coupling the adjacent modules inter-engage and mutual displacement and rotation is counteracted and they form as it were one unit. An optimum transmission of forces in transverse direction can take place in the links thus built up.

Coupling the modules into links prior to connecting the links to each other can take place easily and in a controlled manner.

As a result it is possible to couple the modules to each other in two coupling directions (from the top or from the bottom) and blind spots, in which dirt may accumulate, are prevented.

Preferably the coupling means connect to each other in a snugly fitting manner over a continuous contiguous area, preferably extending over the full height and length (in belt direction) of the coupling.

Preferably the coupling means comprise coupling surfaces that lie against each other and have been provided on both modules to be coupled to each other. Preferably the coupling surfaces are flat for enhancing the fit and the transfer of forces. It is furthermore preferred that the coupling surfaces are oriented with a normal having a directional component oriented in transverse direction of the belt.

Preferably the coupling means comprise several of such coupling surfaces, which -considered in belt direction- are spaced apart. As a result the coupling is made more rigid against bending in the plane of the belt.

Preferably the coupling surfaces comprise one or several surfaces inclined in belt direction and in transverse direction and/or a surface oriented in transverse direction.

In a preferred embodiment the coupling means form a dovetail joint, with which the coupling is optimally stable in the plane of the belt as well as about a centre line in the plane of the belt and parallel to the belt direction.

In a further embodiment the modules are provided with passages for a connection rod at the location of the coupling means.

Preferably the modules situated at the edges are provided with means for sideward confinement to the outside of the connection rod in question at that location. Movement to the outside of the edge modules away from the connection rod is not possible due to the (tensile) connection to the adjacent modules. The confinement means can be simple. Thus the integrity of the belt is safeguarded in a simple manner.

According to a further aspect of the invention, in the elongated links at least one of the modules situated at the edges of the belt conveyor is manufactured of a material different from the material of the other modules in the link in question.

Thus the material used in the belt is adapted to the local function: the parts susceptible to wear may for instance be manufactured of a wear-resistant material or an impact-resistant material, and other parts as light as possible, as a result of which the forces exerted on the belt, also those exerted on the structure of the device in which the belt has been accommodated, can remain limited, which in turn is advantageous to limiting the wear and/or rupture and/or damage.

Preferably in the elongated links both of the modules situated at the edges of the belt conveyor are manufactured of a material different from the material of the other modules in the link in question.

In one embodiment the modules situated at the edge are manufactured of a relatively wear-resistant and sufficiently strong synthetic material, such as POM.

In a further embodiment the modules situated between the edge modules are manufactured of a relatively cheap synthetic material, such a polypropylene.

The invention will be elucidated on the basis of an exemplary embodiment shown in the attached drawings, in which:
Figure 1 shows a top view of a part of the conveyor belt according to the invention, in a curved path;
Figure 2 shows a detail of the belt of figure 1; and
Figure 3 shows a cross-section according to III-III in figure 2.

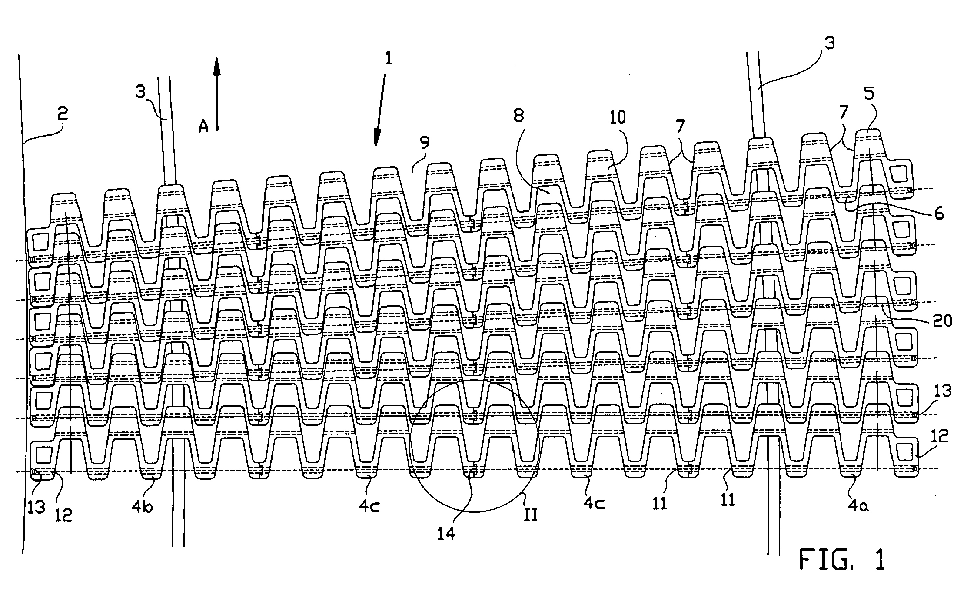

The conveyor belt 1 shown in figure 1, largely corresponds to the one shown in applicant's European patent application 90.202922 and has been laid on guides 3. The belt has been built up from transversely oriented links 4, that are connected to each other by connection rods 20. At the inside radius the links 4 may run into a permanent side guide 2 (not shown) or be propelled by a driven drum.

The links 4 are substantially zig-zag shaped, having "hills" 5 with accommodation spaces 9 situated in between them and "valleys" 6 with accommodation spaces 8 situated in between them, the "valleys" 6 extending in the accommodation spaces 9 of a next link 4 and the "hills" 5 in the accommodation spaces 8 thereof. The "hills" and "valleys" 5 and 6 of a link are formed as a unity with each other from synthetic material and are connected to each other via bodies 7. The "hills" 5 are provided with a spacious passage 10 for a rod 20, and the "valleys" 6 are provided with a narrow passage 11 for a rod 20. In between the bodies 7 the "valleys" 6 have a circular cross-section, coaxial to the passages 11.

The links 4 are composed of an edge module 4a, and edge module 4b and one or more -depending on the desired belt width- intermediate modules 4c. The edge module 4a sits on the guide 3. The edge module 4b also sits on a guide 3 and is guided sideward or driven, respectively, by guide 2.

The edge modules 4a and 4b are manufactured of wear-resistant material such as POM. The modules 4a and 4b may possibly also have been made of different material, such as when only the modules 4b are engaged for driving. The intermediate modules 4c may be manufactured of cheap material, such a polypropylene.

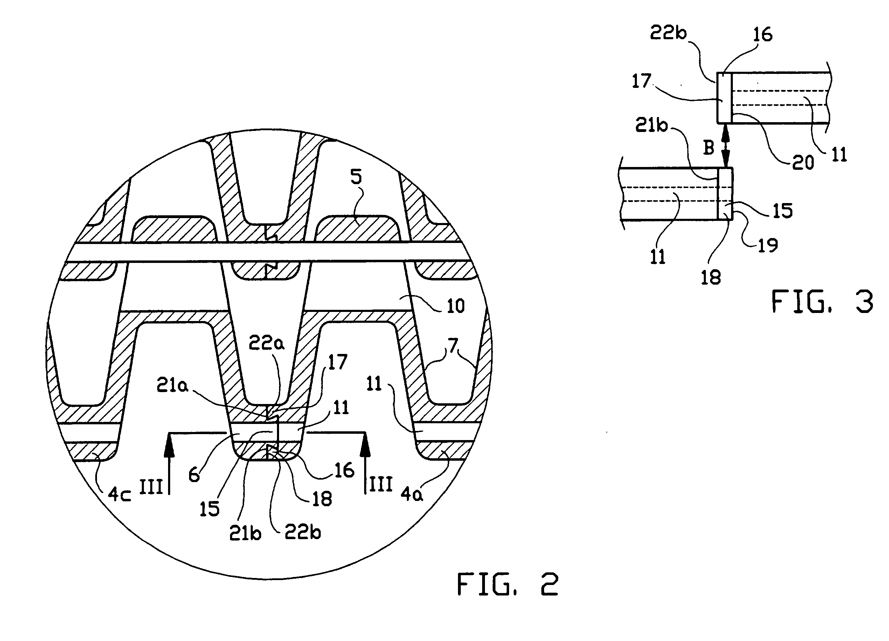

The modules 4a-4c are coupled to each other by couplings 14, see figure 2 and 3. The one module, for instance 4c, has dovetailed protrusions 15 extending over the full height, which protrusions have slanting sides 18 and a surface 19 oriented in transverse direction, two surfaces 21 a,b oriented in transverse direction being present adjacent to the protrusion 15. The other module, for instance 4a, at the opposite end has a continuing recess 16, having slanting sides 17 and a surface 20 oriented in transverse direction, formed correspondingly for a snug, tight fitting with protrusions 15, two surfaces 22a,b oriented in transverse direction being at the recess 16. After the modules 4a, 4b and 4c have been coupled, the surfaces 17-18, 21 a,b-22a,b and 19-20 lie tightly against each other. The coupling here extends in width (longitudinal direction of the belt) and height over the entire area where the modules meet each other.

The modules thus already form one well-manageable unity, capable of absorbing tensile forces. Due to the dovetail the rigidity of the coupling 14 against bending in the horizontal and in the vertical plane can be large.

It can furthermore be seen that the passages 11 extend through the couplings 14. After the rods 20 have been passed through the passages 11, fitting yet axially movable, they are retained outwardly by pins 12 at both ends, and therefore confined, in the end portions 13 of the edge modules 4a and 4b. The modules cannot run apart due to the couplings between the modules. As a result of a frictional fitting of their coupling members the modules can be retained against mutual displacement in a direction perpendicular to the belt. The rod 20 as well can rule out such a movement due to snug fitting in the modules.

## Claims

1. Conveyor belt (1) comprising a series of elongated support members or links (4) for supporting goods to be transported, which links (4) extend transverse to the conveyor belt (1), and a series of connection rods (20) for connecting the links (4) one to the other, the links (4) being built up from a number of, particularly elongated, modules, which at their longitudinal ends have been provided with coupling means (14), said coupling means inter-engage for snug-fitting coupling of the modules (4a, 4b, 4c) one to the other and for forming a rotary-fixed connection in the plane of the belt, **characterized in that** the coupling means are formed to be brought into engagement with each other according to a coupling direction that is perpendicular to the conveyance plane of the conveyor belt (1), the coupling means being continuous in coupling direction, wherein, preferably, the coupling means extending over the full height of the link (4), said coupling means being such that adjacent modules (4a, 4b, 4c) inter-engage and mutual displacement and rotation is counteracted.

2. Conveyor belt (1) according to claim 1, the coupling means connecting to each other in a snugly fitting manner over a continuous contiguous area, preferably extending over the full height and length (in belt direction) of the coupling.

3. Conveyor belt (1) according to claim 1 or 2, the coupling means comprising coupling surfaces (17, 18, 21a,b - 22a,b, 19, 20) that lie against each other and have been provided on both modules (4a, 4b, 4c) to be coupled to each other, wherein, preferably, the coupling surfaces being flat for enhancing the fit and the transfer of forces.

4. Conveyor belt (1) according to claim 3, the coupling surfaces being oriented with a normal having a directional component oriented in transverse direction of the conveyor belt (1), the coupling means preferably comprising several of such coupling surfaces, which -considered in belt direction- are spaced apart.

5. Conveyor belt (1) according to claim 4, the coupling surfaces comprising one or several surfaces inclined in conveyor belt (1) direction and in transverse direction and/or a surface oriented in transverse direction.

6. Conveyor belt (1) according to any one of the preceding claims, the coupling means forming a dovetail joint (15).

7. Conveyor belt (1) according to any one of the preceding claims, at the location of the coupling means the modules (4a, 4b, 4c) being provided with passages for a connection rod (20).

8. Conveyor belt (1) according to any one of the preceding claims, the modules (4a, 4b) situated at the edges being provided with means for sideward confinement to the outside of the connection rod (20) in question at that location.

9. Conveyor belt (1) according to any one of the preceding claims, in the elongated links (4) at least one of the modules (4a, 4b) situated at the edges of the belt conveyor being manufactured of a material different from the material of the other modules in the link (4) in question, wherein, preferably, in the elongated links (4) both of the modules situated at the edges of the belt conveyor being manufactured of a material different from the material of the other modules in the link (4) in question.

10. Conveyor belt (1) according to claim 9, the modules (4a, 4b) situated at the edge being manufactured of a relatively wear-resistant strong synthetic material.

11. Conveyor belt (1) according to claim 8 or 9, the modules situated between the edge modules being manufactured of a relatively cheap synthetic material.

## Patentansprüche

1. Förderband (1), umfassend eine Reihe von länglichen Tragelementen oder -gliedern (4) zum Tragen von zu transportierenden Waren, welche Glieder (4) sich quer zum Förderband (1) erstrecken, und eine Reihe von Verbindungsstangen (20) zur Verbindung der Glieder (4) eines mit dem anderen, wobei die Glieder (4) aus einer Anzahl von, im Besonderen länglichen, Modulen aufgebaut sind, die an ihren Längsenden mit Kopplungsmitteln (14) versehen worden sind, wobei die Kopplungsmittel für eine Passsitzkopplung der Module (4a, 4b, 4c) eines mit dem anderen und zur Bildung einer drehfixierten Verbindung in der Ebene des Bands ineinandergreifen, **dadurch gekennzeichnet, dass** die Kopplungsmittel so geformt sind, dass sie entsprechend einer Kopplungsrichtung, die senkrecht zur Förderebene des Förderbands (1) ist, in Eingriff miteinander gebracht werden können, die Kopplungsmittel in der Kopplungsrichtung fortlaufend sind, wobei sich die Kopplungsmittel vorzugsweise über die gesamte Höhe des Glieds (4) erstrecken, die Kopplungsmittel derart beschaffen sind, dass benachbarte Module (4a, 4b, 4c) ineinandergreifen und einer gegenseitigen Verlagerung und Drehung entgegengewirkt wird.

2. Förderband (1) nach Anspruch 1, wobei die Kopplungsmittel aneinander in einer Passsitzweise über eine fortlaufend berührende Fläche anschließen, sich vorzugsweise über die volle Höhe und Länge (in Bandrichtung) der Kopplung erstreckend.

3. Förderband (1) nach Anspruch 1 oder 2, wobei das Kopplungsmittel Kopplungsflächen (17, 18, 21a, b - 22a, b, 19, 20) umfasst, die einander gegenüber liegen und auf beiden miteinander zu koppelnden Modulen (4a, 4b, 4c) vorgesehen worden sind, wobei die Kopplungsflächen vorzugsweise eben sind, um den Sitz und die Übertragung von Kräften zu erhöhen.

4. Förderband (1) nach Anspruch 3, wobei die Kopplungsflächen mit einer Normale orientiert sind, die eine Richtungskomponente aufweist, die in Querrichtung des Förderbands (1) orientiert ist, das Kopplungsmittel vorzugsweise mehrere solcher Kopplungsflächen umfasst, die - in Bandrichtung betrachtet - auf Abstand angeordnet sind.

5. Förderband (1) nach Anspruch 4, wobei die Kopplungsflächen eine oder mehrere Flächen, die in der Richtung des Förderbands (1) und in Querrichtung geneigt sind, und/oder eine Fläche, die in Querrichtung orientiert ist, umfassen.

6. Förderband (1) nach einem der vorherigen Ansprüche, wobei das Kopplungsmittel eine Schwalbenschwanzverbindung (15) bildet.

7. Förderband (1) nach einem der vorherigen Ansprüche, wobei die Module (4a, 4b, 4c) an der Stelle der Kopplungsmittel mit Durchgängen für eine Verbindungsstange (20) versehen sind.

8. Förderband (1) nach einem der vorherigen Ansprüche, wobei die Module (4a, 4b), die an den Flanken situiert sind, an dieser Stelle mit Mitteln zur seitlichen Beschränkung der fraglichen Verbindungsstange (20) zur Außenseite versehen sind.

9. Förderband (1) nach einem der vorherigen Ansprüche, wobei bei den länglichen Gliedern (4) wenigstens eines der Module (4a, 4b), die an den Flanken des Förderbands situiert sind, aus einem Material hergestellt ist, das sich vom Material der anderen Module im fraglichen Glied (4) unterscheidet, wobei bei den länglichen Gliedern (4) vorzugsweise beide Module, die an den Flanken des Förderbands situiert sind, aus einem Material hergestellt sind, das sich vom Material der anderen Module im fraglichen Glied (4) unterscheidet.

10. Förderband (1) nach Anspruch 9, wobei die Module (4a, 4b), die an den Flanken des Förderbands situiert sind, aus einem vergleichsweise verschleißbeständigen festen synthetischen Material hergestellt sind.

11. Förderband (1) nach Anspruch 8 oder 9, wobei die Module, die zwischen den Flankenmodulen situiert sind, aus einem vergleichsweise billigen synthetischen Material hergestellt sind.

## Revendications

1. Courroie de transporteur (1) comprenant une série d'organes, ou de liaisons, de support allongés (4) pour supporter des marchandises qui doivent être transportées, lesquelles liaisons (4) s'étendent de façon transversale à la courroie de transporteur (1), et une série de tiges de raccordement (20) pour raccorder les liaisons (4) les unes aux autres, les liaisons (4) étant constituées d'un certain nombre de modules particulièrement allongés qui, au niveau de leurs extrémités longitudinales, ont été pourvus de moyens de couplage (14), lesdits moyens de couplage viennent mutuellement en prise pour coupler par ajustement serré les modules (4a, 4b, 4c) les uns aux autres et pour former une connexion à fixation rotative dans le plan de la courroie, **caractérisée en ce que** les moyens de couplage sont formés pour être mis en prise les uns avec les autres selon une direction de couplage qui est perpendiculaire au plan de transport de la courroie de transporteur (1), les moyens de couplage étant continus dans la direction de couplage, dans laquelle, de préférence, les moyens de couplage s'étendent sur toute la hauteur de la liaison (4), lesdits moyens de couplage étant tels que les modules adjacents (4a, 4b, 4c) viennent mutuellement en prise et que le déplacement et la rotation mutuels sont neutralisés.

2. Courroie de transporteur (1) selon la revendication 1, dans laquelle les moyens de couplage se raccordent les uns aux autres selon une manière d'ajustement serré sur une partie continue contiguë, de préférence en s'étendant sur toute la hauteur et sur toute la longueur (dans la direction de courroie) du couplage.

3. Courroie de transporteur (1) selon la revendication 1 ou 2, dans laquelle les moyens de couplage comprennent des surfaces de couplage (17, 18, 21a,b - 22a,b, 19, 20) qui sont disposées l'une contre l'autre et qui ont été prévues sur les deux modules (4a, 4b, 4c) pour qu'ils soient couplés l'un à l'autre, dans laquelle, de préférence, les surfaces de couplage sont plates pour améliorer l'ajustement et le transfert des forces.

4. Courroie de transporteur (1) selon la revendication 3, dans laquelle les surfaces de couplage sont orientées avec une normale ayant un composant directionnel orienté dans la direction transversale de la courroie de transporteur (1), les moyens de couplage comprenant, de préférence, plusieurs surfaces similaires de couplage, qui, considérées dans la direction de courroie, sont espacées.

5. Courroie de transporteur (1) selon la revendication 4, dans laquelle les surfaces de couplage comprennent une ou plusieurs surfaces inclinées dans la direction de la courroie de transporteur (1) et dans la direction transversale et/ou une surface orientée dans la direction transversale.

6. Courroie de transporteur (1) selon l'une quelconque des revendications précédentes, dans laquelle les moyens de couplage forment un assemblage à queue d'aronde (15).

7. Courroie de transporteur (1) selon l'une quelconque des revendications précédentes, dans laquelle, au niveau de l'emplacement des moyens de couplage, les modules (4a, 4b, 4c) sont prévus avec des passages pour une tige de raccordement (20).

8. Courroie de transporteur (1) selon l'une quelconque des revendications précédentes, dans laquelle les modules (4a, 4b) situés aux bords sont prévus avec des moyens pour un confinement latéral à l'extérieur de la tige de raccordement (20) en question au niveau de cet emplacement.

9. Courroie de transporteur (1) selon l'une quelconque des revendications précédentes, dans laquelle, dans les liaisons allongées (4), au moins l'un des modules (4a, 4b) situés aux bords de la courroie de transporteur est fabriqué en un matériau différent du matériau des autres modules dans la liaison (4) en question, dans laquelle, de préférence, dans les liaisons allongées (4), les deux modules situés aux bords de la courroie de transporteur sont fabriqués en un matériau différent du matériau des autres modules dans la liaison (4) en question.

10. Courroie de transporteur (1) selon la revendication 9, dans laquelle les modules (4a, 4b) situés au bord sont fabriqués en un matériau synthétique solide résistant relativement à l'usure.

11. Courroie de transporteur (1) selon la revendication 8 ou 9, dans laquelle les modules situés entre les modules de bord sont fabriqués en un matériau synthétique relativement bon marché.
